# EUROPEAN PATENT SPECIFICATION

(11) **EP 4 734 590 B1**
(45) Date of publication and mention of the grant of the patent: **09.12.2026**
(21) Application number: 24208102.4
(22) Date of filing: 22.10.2024
(51) Int. Cl.: H04W 24/02, H04W 24/08, H04W 52/02

(54) **METHOD AND SYSTEM FOR MANAGING RADIO RESOURCES IN A MOBILE COMMUNICATION NETWORK**
VERFAHREN UND SYSTEM ZUR VERWALTUNG VON FUNKRESSOURCEN IN EINEM MOBILKOMMUNIKATIONSNETZ
PROCEDE ET SYSTEME DE GESTION DE RESSOURCES RADIO DANS UN RESEAU DE COMMUNICATION MOBILE

(43) Date of publication of application: 29.04.2026
(73) Proprietor: Deutsche Telekom AG, 53113 Bonn (DE)
(72) Inventor: TOTTINGHAM, John, 50226 Frechen (DE); RUTCZYNSKA, Aleksandra, 51113 Bonn (DE); WEIGEL, Thomas, 64293 Darmstadt (DE); KETTENHOFEN, Max, 53225 Bonn (DE)
(74) Representative: karo IP

(56) References cited:
- WO-A1-2014/110962
- CN-A- 115 226 186
- US-A1- 2019 090 246
- PREMSANKAR GOPIKA ET AL: "Data-Driven Energy Conservation in Cellular Networks: A Systems Approach", IEEE TRANSACTIONS ON NETWORK AND SERVICE MANAGEMENT, IEEE, USA, vol. n18, no. 3, 25 May 2021 (2021-05-25), pages 3567 - 3582, XP011876115, DOI: 10.1109/TNSM.2021.3083073

## Description

The present invention relates to the field of mobile communication networks, specifically to methods and systems for efficient management of radio resources. It addresses the optimization of resource allocation, particularly for uplink and downlink traffic, by using time-dependent traffic predictions based on historical data.

In current mobile communication networks, radio resource management often relies on static or semi-static approaches, where the allocation of resources does not fully adapt to the dynamic nature of traffic demands. Existing systems may allocate resources equally between uplink and downlink traffic, without considering real-time traffic patterns or the differences in demand between these channels. Such systems often overlook the potential of using historical traffic data for predicting future traffic patterns, which could optimize resource allocation.

Furthermore, features such as CellShutDown are typically applied uniformly, without considering the specific traffic conditions of individual cells or the distinctions between uplink and downlink traffic. As a result, there is inefficiency in resource usage, with network resources being underutilized or over-allocated during periods of low demand. This not only wastes energy but also reduces network performance.

CN 1 1 5 226 186 A relates to wireless communications, and more particularly relates to a method for determining a set of cells having the same configuration in the uplink and downlink sub-frame matching apparatus, method, and system base stations. In this document, a cell power-off energy saving method is provided which includes: Determining the group of sectors covered by the multi-layer network; Extracting historical service data, and determining the bearer threshold threshold of the carrier used by each cell in the sector group in the specified dimension; According to the bearing threshold threshold of each carrier, calculating the combined bearing threshold threshold of the carrier combination of different levels in the sector group in the specified dimension; Determining the cells to be turned off and the time period to be turned off according to the combined bearer thresholds in the specified dimension corresponding to the carrier combinations of different levels, and comparing with the predicted value of the service data in each time period of the sector group; A cell shutdown command is generated and executed according to the cell to be turned off and the time period to be turned off, so as to turn off the cell to be turned off.

PREMSANKAR GOPIKA ET AL: "Data-Driven Energy Conservation in Cellular Networks: A Systems Approach", IEEE TRANSACTIONS ON NETWORK AND SERVICE MANAGEMENT, 2021-05-25, pages 3567-3582, XP011876115 discloses a method of significant energy savings can be achieved by switching off cells during periods of low utilization.

The task of the invention is to provide techniques for managing radio resources in a mobile communication network that addresses the limitations of current approaches. In particular, the invention aims to introduce a more efficient way of managing resources by using time-dependent traffic predictions based on historical data.

This object is solved by the features of the independent claims.

The features of the various aspects of the invention described below or the various examples of implementation may be combined with each other, unless this is explicitly excluded or is technically impossible, without however departing from the scope of the invention as defined by the appended claims.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

According to a first aspect of the invention, a method according to claim 1 is provided.

The proposed method efficiently manages radio resources by adjusting resource allocation for each frequency separately based on historical traffic data and real-time predictions. In particular, the management of the radio resources is also done separately for the uplink and downlink traffic. By means of the priority indicator the radio-capacity-threshold can be different for the various frequencies. This leads to the effect that the comparison step results in different outcomes for the various frequencies so that the feature can be applied for a first frequency but not for a second frequency. Therefore, the feature can be applied in a stepwise manner with respect to the different frequencies so that only one or a subset of the frequencies are being activated and the other frequencies are being activated later if the time-dependent of traffic prediction increases. This enables dynamic resource optimization, reducing energy consumption and improving network performance by applying features like CellShutDown when data traffic within the sector is expected to be low. A lower priority indicator relates to a more important frequency in that this frequency shall continue to be provided while other frequencies with a higher priority indicator can be shut off.

In principle, this is a convention of the invention.

The radio-capacity-threshold of a cell i can be calculated as follows: radio-capacity-threshold_{Cell_i} = radio capacity_{Cell_i} * (priority_value_{cell_i} * configuration_value_sector), wherein the configuration_value_sector is smaller than 1 and the priority_value_{cell_i} can be a value from 0, 1, 2, 3, 4, and so on. Hence, the lower the priority_value_{cell_i} of a cell, the smaller is the respective radio-capacity-threshold that increases the likelihood that the time-dependent traffic prediction is over the cell's radio-capacity-threshold, wherein in this case, the feature is deactivated.

In an embodiment, the steps of the method are being carried out exactly in the order described above.

In an embodiment of the method, the feature is a CellShutDown functionality that reduces the number of active radio units providing network resources in a cell when the time-dependent traffic prediction for that cell indicates that its resource usage is below a predefined threshold, in particular, the CellShutDown functionality is applied separately to the different cells, to the uplink or the downlink of a certain cell.

This enhances energy savings by allowing the CellShutDown functionality to be applied separately to uplink and downlink channels, ensuring that the network does not waste resources on channels with low traffic demand while maintaining operational efficiency in the other channel.

In an embodiment of the method, PRB sample index counter data are used to calculate the time-dependent traffic prediction, and wherein PRB sample index counter data is measured in bins and records the duration of PRB utilization in seconds for defined levels of utilization, with each bin representing a different level of utilization of the radio resources, wherein the measurement is done over a predetermined period based on historical PRB usage data.

By using PRB sample index counter data, a new and more accurate and granular method for predicting traffic based on real usage is possible, improving the precision of the traffic predictions and ensuring that resource allocation decisions are based on reliable data.

In an embodiment of the method, a total radio capacity of the sector is calculated by summing the PRB capacity of all cells within the sector, wherein the radio capacity is summed up over all frequencies but separately for the uplink and downlink cases.

This ensures knowledge about the total radio capacity of the sector. The calculation of total radio capacity accounts for both uplink and downlink traffic separately, leading to better insight about resource capabilities of the base station or the sector, respectively. In particular, the sector can then be compared to a second sector and can be assessed which has the most radio capacity. As a rule of thumb, the higher the radio capacity of a sector is, the more radio resources can be shut down.

In an embodiment of the method, a scaling factor is determined based on the total radio capacity of the sector, wherein this results in the radio-capacity-threshold for each frequency as being a function of the priority indicator, the radio capacity, and the scaling of each cell. The higher the total radio capacity of the sector is, the higher the scaling factor is being sent, which leads to a higher radio-capacity-threshold. The scaling factor is a uniform value for a whole sector. In this case the radio-capacity-threshold can be calculated as follows: radio-capacity-threshold_{Cell_i} = radio capacity_{Cell_i} * (scaling factor_sector + priority_value_{cell_i} * configuration_value_sector).

This approach allows for flexible threshold setting, ensuring that the allocation of resources is more accurately tuned to the specific traffic conditions and capacities of the sector. It is surprising that the parameters like the priority value and the radio capacity are distinct values for each cell, wherein the scaling factor is a common value for the whole sector and everything is within a single formula to calculate the radio-capacity-threshold_{Cell_i}. The rational behind this idea is that the various cells or the respective frequencies can back up each other with respect to utilization by users. For example, if a certain frequency is being required by a user equipment and this frequency is not being available because this cell was shut down then simply another frequency that has not being shut down can be used. The more radio capacity a sector has, the better this backing up works. This is being reflected by the respective scaling factor.

In an embodiment of the method further comprising setting an upper bound for the time-dependent traffic prediction of each cell, wherein the upper bound is a 95th quantile or a 99th quantile of the cell's utilization. The upper bound can in theory be any value. The higher the value, the more sensitive will be the use of histogram data being provided to the traffic forecast. The feature or the RAN engineers currently stipulate 95% or 99% but it can be any value.

By setting an upper bound for traffic predictions, this claim ensures that resource allocation is responsive to high-traffic periods, preventing the system from being overwhelmed by unexpected traffic surges. Using quantiles yields to the effect that one can set efficient upper bound that cover the typical usage cases with an adjustable probability.

In an embodiment of the method, wherein the priority indicator is assigned based on the frequency of each cell, with higher-frequency cells having a higher priority indicator, and the priority indicator determines the order in which features are applied to the frequencies in the sector.

This ensures that higher-frequency cells that consume more energy are shutdown more likely.

In an embodiment of the method, the step of applying the feature comprises:
a) Activating a feature in real-time when the traffic prediction for a specific cell is below a threshold value determined by the priority indicator for that frequency;
b) Deactivating the feature in real-time when the traffic prediction exceeds the threshold value.

This claim ensures that features like CellShutDown are applied and deactivated in real-time, responding to live traffic conditions, thus improving network responsiveness and efficiency. The feature responds real-time to traffic based on the threshold settings it has been provided. In this innovation we are providing more and therefore settings to the feature for more cells based on the traffic forecast. We provide these setting close to real-time.

In an embodiment of the method, the historical traffic data used for the time-dependent traffic prediction is based on a predetermined period, such as the past 7 days, and is scaled by taking into account weekly patterns and special days of importance.

By using historical data that reflects weekly patterns or special events, this improves the accuracy of traffic predictions, allowing the system to anticipate traffic surges or reductions and adjust resource allocation accordingly.

In an embodiment of the method, the time interval for calculating the traffic prediction can be adjusted based on the desired level of prediction accuracy and wherein the time interval for the traffic prediction corresponds to the time interval for applying the feature.

This claim ensures that traffic predictions and feature applications are made at appropriate intervals which improves the accuracy and allows for real-time adjustments based on network conditions, which prevents unnecessary or delayed responses.

According to a second aspect of the invention, a radio-resources-management-module of a mobile communication network as defined in claim 11 is provided.

This radio-resources-management-module automates the process of traffic assessment and resource management, allowing for real-time adjustments based on traffic predictions, reducing energy consumption, and optimizing resource use for both uplink and downlink traffic. In particular, the radio-resources-management-module is configured to carry out the steps according to the method described above.

In an embodiment, the radio-resources-management-module comprising a real-time scheduler configured to apply the feature to the cell in real-time.

The real-time scheduler ensures that feature application is immediate and responsive to changing traffic conditions, improving overall network efficiency.

According to a third aspect of the invention, a communication system **as** defined in claim 13 is provided.

This communication system ensures seamless integration of real-time traffic predictions and resource management within a mobile network provider's infrastructure, allowing the system to dynamically adjust resource allocations based on historical and real-time data.

In an embodiment, the communication system of Claim 13, supporting 3G, 4G, 5G, and/or 6G mobile communication.

This claim ensures that the communication system is compatible with multiple generations of mobile communication standards, allowing it to be implemented in various network environments, from legacy networks (3G and 4G) to advanced, high-speed networks (5G and 6G). This compatibility enhances the flexibility and applicability of the system across a wide range of mobile communication technologies.

According to a fourth aspect of the invention, a computer-readable storage medium comprising program instructions is disclosed, which when executed by a processor of a radio-resources -management-module of a mobile communication network, cause the radio-resources-management-module to perform any one of the methods of claims 1-10.

This broadens the scope of the invention by enabling its implementation via software stored on a computer-readable medium. This ensures that the method for managing radio resources can be deployed in software-based systems, allowing easy updates, flexibility in implementation, and compatibility with various hardware systems in mobile network infrastructure.

In the following, preferred implementation examples of the present invention are explained with reference to the accompanying figure:
- Fig. 1:: shows a method according to the invention;
- Fig. 2:: shows an inventive communication system;
- Fig. 3:: shows a 30 min PRB Histogram Utilization;
- Fig. 4:: shows PRB Histogram Data and 0.95 and 0.99 Quantile;
- Fig. 5:: shows a typical average PRB utilization per 30 min interval;
- Fig. 6:: shows 0.99 quantile PRB utilization per 30 min interval;
- Fig. 7:: shows quantile calculations for previous 300 time intervals;
- Fig. 8:: shows uplink PRB 0.99 quantile prediction vs actual PRB utilization;
- Fig. 9:: shows threshold determination through load capacity determination and prioritization;
- Fig. 10:: shows traffic predictions (uplink and downlink) with associated CellShutdown feature activation threshold;
- Fig. 11:: shows threshold nesting effects;
- Fig. 12:: shows scheduler mechanism with offset;
- Fig. 13:: shows open loop scheduler operation for configuration expired in past;
- Fig. 14:: shows open loop scheduler operation for configuration not fully expired;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

Within the context of the invention, the feature CellShutdown functionality can be described as follows: In mobile networks refers to a mechanism that allows a base station to temporarily deactivate certain cells (or parts of a cell's frequency spectrum) to save energy when they are not needed, such as during low-traffic periods. This feature is part of intelligent energy-saving strategies in modern cellular networks like 4G, 5G, and beyond.

Key Aspects of CellShutdown:
1. Energy Efficiency: The primary goal is to reduce power consumption by shutting down underused radio resources during off-peak hours (e.g., at night). Base stations are significant energy consumers, and shutting down idle cells can lead to substantial energy savings.
2. Traffic Prediction: The feature typically works in conjunction with traffic prediction algorithms. These algorithms forecast network usage patterns and decide when it's appropriate to shut down certain cells. For instance, if a cell is predicted to have low utilization (say, less than 35% of its capacity), it can be switched off until demand increases.
3. Selective Shutdown: Instead of shutting down the entire base station, only specific frequencies or sectors of the base station may be shut down. For example, in a multi-frequency base station, the 1800 MHz frequency may be deactivated while other frequencies (e.g., 900 MHz) remain operational for users still connected.
4. Seamless Re-Activation: Cells are not permanently shut down. They can be reactivated automatically when traffic demand increases. This ensures that network coverage and service quality are maintained as demand fluctuates throughout the day.
5. Conditional Triggers: CellShutdown is typically triggered based on predefined rules such as utilization thresholds, time of day, or predicted demand. It can also incorporate "punish times," which delay the reactivation of cells to avoid frequent on/off switching, which could affect performance.
6. Just-in-Time Scheduler: A key part of the innovation is a "just-in-time scheduler" that ensures the feature is applied right when it's needed. The scheduler activates CellShutdown based on traffic conditions in near-real-time, optimizing energy savings while ensuring network quality.

Let's say a base station serving a suburban area experiences low demand between 10 PM and 6 AM. During this time, the CellShutdown feature could deactivate the 1800 MHz frequency band, while keeping the 900 MHz band operational to serve the reduced traffic. When traffic picks up again in the morning, the 1800 MHz band is reactivated to meet the higher demand.

In summary, CellShutdown is an energy-efficient feature that reduces the operational costs of a mobile network by temporarily deactivating underutilized cells while maintaining the quality of service for end-users.

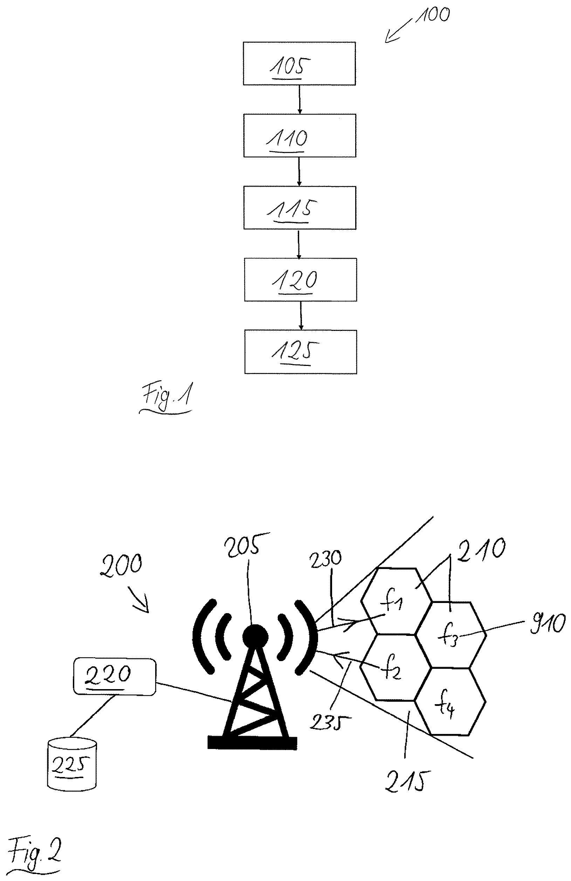

Fig. 1 shows a method 100 according to the invention. The method comprising of the following steps:
step 105: Assessing traffic data of cells 210, in particular separately for the Uplink 235 and Downlink 230, in a sector 215 based on historical traffic data to determine a time-dependent traffic prediction 600 for the cells of the sector 215;
step 110: Determining a radio capacity, in particular separately for the Uplink 235 and Downlink 230, of each cell 210 based on the available radio resources in each cell, wherein each cell's frequency contributes to a total radio sector capacity;
step 115: Assigning a priority indicator 905 to each frequency 910 within the sector, wherein the priority indicator 905 determines the order in which features are applied to the respective frequencies 910;
step 120: Comparing a radio-capacity-threshold 1010 for each frequency of the sector, in particular separately for the Uplink and Downlink, with the time-dependent traffic prediction for the respective frequency, wherein the radio-capacity-threshold for each frequency is a function of the priority indicator and the radio capacity of each cell; the radio-capacity-threshold 1010 can also comprise an Offset value to make the method more robust;
step 125: Applying a feature 1015 to a specific cell, in particular separately for the Uplink and Downlink, if the time-dependent traffic prediction for that cell 210 is lower than the cell's radio-capacity-threshold.

Fig. 2 shows an inventive communication system 200. A base station 205 provides mobile communication capabilities for users with in the cells 210, wherein neighboring cells have different frequencies f1, f2, f3, .... The cells 210 makeup a communication sector 215. The base station 210 is in data communication a radio-resources-management-module 220, wherein the radio-resources-management-module 220 is configured to execute the steps of the method described above in particular to assess if a predicted data traffic of a level 210 is lower than a radio-capacity-threshold of that cell and send a signal to the base station 205 to shut down the respective cell if it is to be expected that the predicted data traffic is below the radio-capacity-threshold in order to save communication resources. Fig. 2 also shows a database 225 that is in data communication with the radio-resources-management-module 220 in order to obtain data like historical data traffic of the cells and/or radio capacity information of the cells. That information can be provided by the network operator.

In summary, the method of the invention can comprise three distinct mechanisms, which can be combined to determine when and how to apply specific parameters to features, such as the CellShutDown functionality, which manages radio resources and frequencies in a mobile network.

This solution is applicable to any base station feature that can be triggered based on radio capacity thresholds and that requires the configuration of parameters depending on these capacity conditions.

The radio capacity of a base station is a critical factor in determining its performance and operational efficiency. It directly influences the number of users that the base station can support simultaneously, as well as the available bandwidth and data throughput, thereby facilitating the transmission of larger volumes of data and supporting high-speed services. Additionally, radio capacity plays a key role in the allocation of frequency channels, ensuring more efficient utilization of the frequency spectrum, and enhancing the base station's ability to leverage carrier aggregation for higher data rates.

Radio capacity also affects the deployment of advanced technologies such as Multiple Input Multiple Output (MIMO), which boosts spectral efficiency and improves signal quality. Furthermore, it is essential for maintaining low latency and ensuring high Quality of Service (QoS), particularly for real-time applications. Effective management of interference, smooth handovers between cells, and advanced load balancing and resource allocation are all heavily dependent on the radio capacity of the base station. While the coverage area is primarily determined by transmission power, the efficiency with which resources are utilized within a cell's coverage area, especially in densely populated regions, is influenced by its radio capacity.

The solution is compatible with current and future network technologies, including 2G, 3G, 4G, 5G, 6G, and Narrowband loT (NB-loT). The same mechanisms could also be extended to Wi-Fi networks.

The process of feature activation can be triggered in base stations 210 when specific conditions are met. For example, if the traffic prediction indicates that radio capacity utilization is forecasted to be below 35% between 9:30 PM and 11:00 PM, the CellShutDown energy-saving feature may be activated on the LTE 1800MHz frequency. An offset parameter of 10% can be applied, optionally along with a punish time of, e. g 3 minutes for a certain cell 210. Activating this feature reduces the number of active radio units delivering network resources, thereby lowering unnecessary energy consumption.

In this context, even if actual radio capacity usage slightly exceeds 35%, the system can permit an additional 10% buffer before deactivating the CellShutDown feature, preventing premature reactivation. The punish time refers to a 3-minute waiting period following the activation of the CellShutDown feature. Once triggered, the system can wait for this duration before reactivating the cell 210 or making further decisions regarding energy-saving actions. This delay prevents frequent toggling of the CellShutDown feature, which could lead to operational inefficiencies or service disruptions.

The first mechanism is focused on accurate traffic prediction based on the historical utilization of Physical Resource Blocks (PRBs). This mechanism is designed to ensure that sufficient mobile capacity is always available while identifying any excess capacity that can be optimized.

The second mechanism is a prioritization and/or nesting system that determines the conditions, timing, and durations during which a feature can be activated or deactivated. According to the invention, the first and second mechanisms work together to apply a feature to a radio resource with configurations that maintain continuous, high-quality network performance. In other words, the feature is a function of the base station, correlated to the availability of radio capacity. The feature, for example, can be CellShutDown.

The third mechanism is a real-time scheduler. Its role is to ensure that the settings determined by the feature configurator are deployed to the network just-in-time. Unlike conventional methods where configurations are sent in batches, typically during nighttime, the scheduler in this invention dispatches configurations calculated by the feature configurator just seconds before they are needed for activation.

In the following the mechanism will be described in detail.

### Mechanism 1 - Traffic Prediction

Features can be applied to individual radio resources, wherein the operational characteristics of the cell 210 in the base station 205 depend on the utilization of these resources. A cell is defined by a specific frequency, such as 1800MHz or 900MHz, and provides a certain amount of mobile network coverage and capacity based on its allocated bandwidth.

The purpose of the traffic prediction mechanism is to estimate the total number of radio resources required at any given moment over a defined future period, such as the next 24 hours. The length of this period can be adjusted based on the required level of prediction accuracy. Shorter intervals typically offer more accurate predictions, while longer periods may lead to less precise outcomes.

The prediction is based on historical usage data, enabling the calculation of the difference between total available radio capacity (TARC) and required radio capacity (RRC). This difference, referred to as excess radio capacity (ERC), determines the availability of capacity for applying network features: $TARC - RRC = ERC$

Features can be applied independently to the uplink (UL) and downlink (DL) traffic. To achieve this, the system uses Physical Resource Block (PRB) counters, which are separated for uplink and downlink bandwidths, allowing independent assessments of resource utilization and capacity for each channel. The granularity of the PRB data capture depends on the network timing interval, with typical intervals ranging from 30 minutes to 15 minutes in SRAN networks, although the invention supports shorter intervals if needed.

Since PRB utilization fluctuates based on network traffic, a 30-minute time interval might contain several PRB measurement points. These measurements are summed and averaged over the interval, resulting in a percentage-based representation of PRB utilization (e.g., 23.5% PRB DL utilization between 9:30 PM and 10:00 PM).

To accurately trigger network features, traditional average PRB counters are insufficient due to their lack of precision. The invention introduces a more accurate method by utilizing PRB sample index counter data provided by various radio technologies. These sample data are collected in bins that record the duration (in seconds) of PRB utilization for defined levels of traffic. Each bin represents a different utilization level of radio resources.

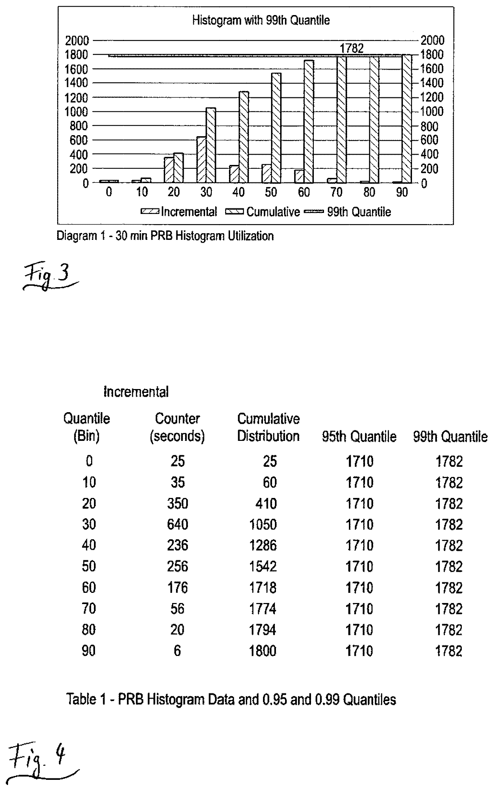

For example, in Fig. 3, ten utilization bins are shown for a single time interval: 0-10% (bin 1), 10-20% (bin 2), up to 90-100% (bin 10). On the x-axis, bin "1" is labeled as "0," bin "2" is labeled as "10," bin "3" as "20," continuing until bin "10" is labeled as "90." Each bin records the number of seconds that the PRB utilization remained within that utilization range.

By utilizing this sample data, histograms can be generated for each radio frequency, providing more detailed insight into PRB utilization distributions over time intervals. Additionally, statistical parameters such as the minimum, maximum, median, and standard deviation of PRB utilization can be calculated, allowing for a more refined traffic prediction.

Histogram data can be utilized to calculate various levels or upper bounds of PRB utilization within a given time interval (see Fig. 3, horizontal line) by using quantiles. For example, the 95th quantile corresponds to a cumulative PRB utilization of 1710 seconds in the 6th bin (representing 50% utilization), and 1782 seconds in the 8th bin (representing 70% utilization). This means that 95% of the cumulative PRB utilization occurred during a 1710 second period and 99% of the cumulative PRB utilization occurred during 1982 seconds.
- For a 95% upper bound: $1800 seconds \times 0.95 = 1710 seconds$
- For a 99% upper bound:
$1800 seconds \times 0.99 = 1782 seconds$

Fig. 4 shows a table of the histogram data and the 0.95 and 0.99 quantiles.

By calculating these upper bounds (e.g., 95%, 99%), the system can offer different levels of sensitivity to traffic load prediction. The higher the upper bound, the more cautious the system becomes regarding PRB utilization during the interval, allowing for greater capacity to handle unforeseen traffic surges. The invention allows for the selection of different pre-determined upper bounds based on the required sensitivity level for the system.

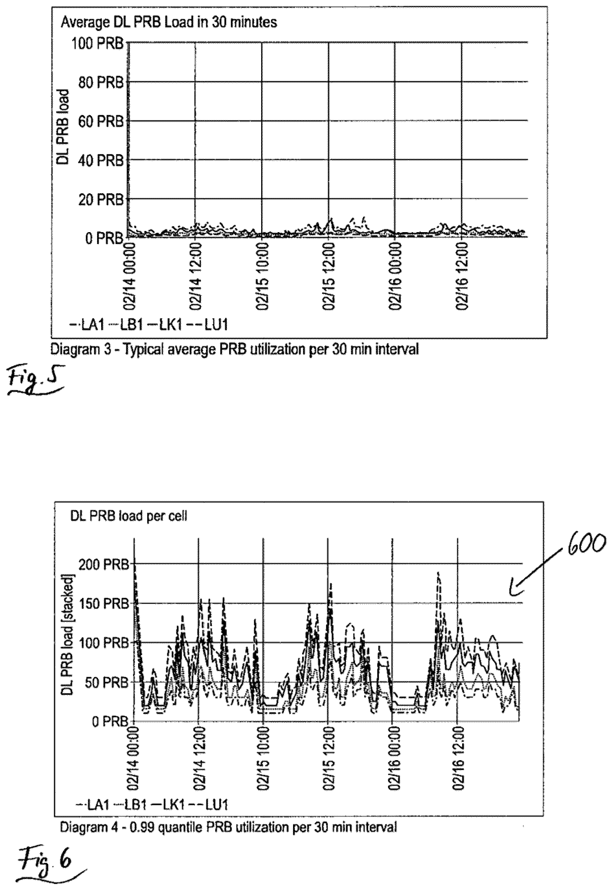

Fig. 5 and Fig. 6 illustrate the difference between the conventional average PRB utilization approach and the quantile-based method according to the invention. Fig. 5 shows the conventional approach, while Fig. 6 demonstrates the quantile-based method, which offers a far more accurate representation of PRB utilization over a given period. LA1, LB1, LK1, LU1 refer to the different cells 210.

In the context of the invention, traffic prediction for a base station is derived using the upper bound PRB values over a historical period (e.g., the last 8 days). Different algorithms with various feature configurations can be used to generate predictions, taking into account specific patterns such as weekdays, weekends, and days of high traffic importance (e.g., special events). The calculated upper bounds can be used as input for these algorithms.

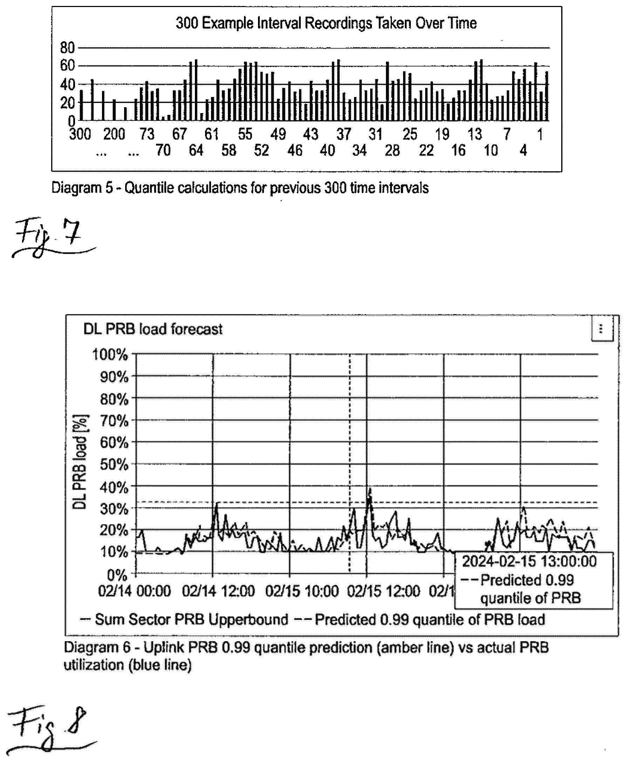

An upper bound calculation is performed for each historical interval for each individual cell frequency of a base station (see Fig. 7), covering both uplink and downlink channels. The calculated upper bounds are then provided to a forecasting algorithm to predict the expected traffic load for a future time period. For operational efficiency and accuracy, the prediction typically covers a period of up to 24 hours, although longer periods can be supported if needed.

Once the PRB load predictions are generated for each cell, they are aggregated to create the overall traffic prediction for the sector of a base station, accounting for both uplink and downlink frequencies (as shown in Fig. 8): $\sum {PRB}_{UL} = \left({PRB}_{UL , f 1}\right) + \left({PRB}_{UL , f 2}\right) + \left({PRB}_{UL , f 3}\right) + ⋯ + \left({PRB}_{UL , fn}\right)$ $\sum {PRB}_{DL} = \left({PRB}_{DL , f 1}\right) + \left({PRB}_{DL , f 2}\right) + \left({PRB}_{DL , f 3}\right) + ⋯ + \left({PRB}_{DL , fn}\right)$

This summation results in an aggregate traffic prediction for the sector, ensuring precise management of both uplink and downlink traffic, optimizing the system's ability to handle predicted loads efficiently.

### Mechanism 2 - Prioritization and/or Nesting

The second mechanism involves translating the traffic prediction (e.g., the 95th quantile values) into specific parameter settings for applying network features. This mechanism allows for individualized parameter configuration for each cell in both uplink and downlink, ensuring the targeted application of features such as CellShutDown to specific frequencies. This results in improved network performance control.

For the CellShutDown feature, the parameters include thresholds that define the PRB utilization levels at which the feature is triggered, along with on/off times for activation or deactivation, as well as optional parameters like offsets and punish times.

### First Step - Calculating Total Available Radio Capacity (TARC):

In the first step, the Total Available Radio Capacity (TARC) of a sector is calculated by summing the available frequencies in the sector. For instance, a sector may consist of the following frequency allocations:
- 900 MHz with 10 MHz (~50 PRBs)
- 1500 MHz with 10 MHz (~50 PRBs)
- 1800 MHz with 20 MHz (~100 PRBs)
- 1800 MHz with 10 MHz (~50 PRBs)
- 2600 MHz with 20 MHz (~100 PRBs)

The aggregate PRB capacity for both uplink and downlink can be calculated as follows:
- Uplink (UL): $\sum {PRB}_{UL} = 50 + 50 + 100 + 50 + 100 = 350 PRB$
- Downlink (DL): $\sum {PRB}_{DL} = 50 + 50 + 100 + 50 + 100 = 350 PRB$

The total available radio capacity for the sector is thus 350 PRBs for the uplink and 350 PRBs for the downlink, totaling 700 PRBs. These values represent the maximum available capacity for the sector and determine the extent to which capacity can be adjusted using a feature like CellShutDown.

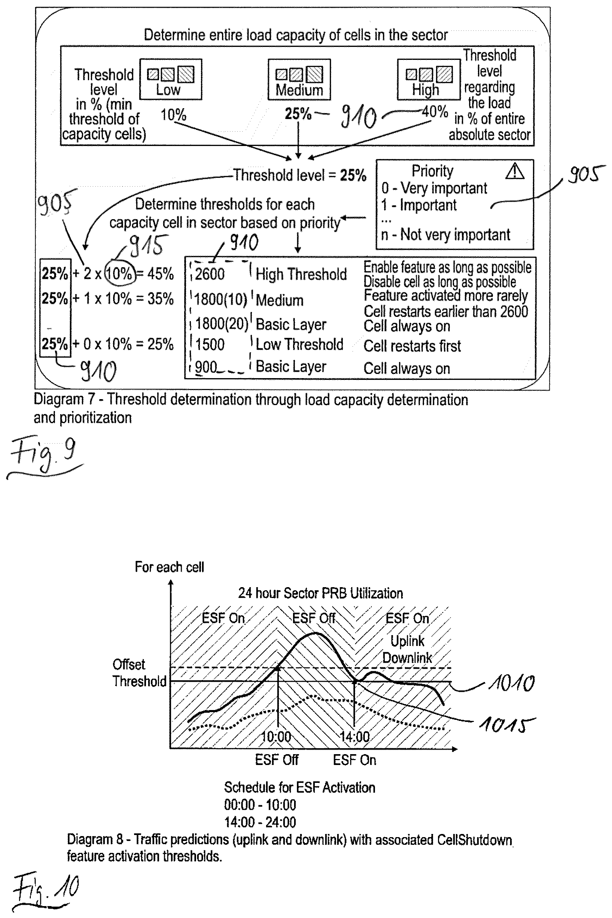

The larger the amount of capacity made unavailable through CellShutDown, the greater the impact on network performance. As a result, accurately assessing the available radio capacity is crucial for maintaining satisfactory network performance. In this invention, a sector can be assigned a scaling factor 910 based on its load capacity (as shown in Fig. 9), which is used later to determine how much capacity can be shut down.

A low radio cell capacity can have a scaling factor of 10%. A medium radio cell capacity can have a scaling factor of 25%. A high radio cell capacity can have a scaling factor of 40%. However, these values can be adjusted to best match the actual performance.

For example, if 200 PRBs are deemed acceptable for shutdown, the CellShutDown feature will save energy by deactivating 200 PRBs. However, these 200 PRBs are distributed across various frequencies, each consuming its share of PRBs.

### Second Step - Assigning Priority to Frequency Bands:

In the second step, each frequency band is assigned a priority value 905 - that can also be named priority indicator 905 - that indicates the importance of the cell, based on a prioritization schema, wherein the prioritization schema can be: Very important (frequency) corresponds to priority indicator 0; important (frequency) corresponds to priority indicator 1, less important (frequency) corresponds to priority indicator 2, not important (frequency) corresponds to priority indicator 3. Important means within this context that it is not that important to shut this frequency down. For instance:
- 2600 MHz may be assigned a priority value of 2,
- 1800 MHz with 10 MHz may be assigned a value of 1,
- 1500 MHz with 10 MHz may be assigned a value of 0.

The priority value determines the order in which features like CellShutDown are applied to the cell. Higher-priority frequencies receive the feature application earlier.

The purpose of assigning priorities to cells is to manage each cell's traffic independently through the parameterization of the feature. This ensures that the feature can be applied selectively to different frequencies, allowing for more granular control over network performance and resource management.

### Third Step - Layer Priority Increment

In a third step, an additional configurable value 915 named the layer priority increment 915 is determined for each cell 210. This configurable value 915 is pre-specified within the communication system 200 to adjust how priorities are handled. As shown in Fig. 9, the configurable value 915 is set to 10% across all cells. This configurable value 915 can be configured based on the system's operational requirements.

### Fourth Step - Deriving PRB Utilization Thresholds

In the fourth step, the load capacity calculated in the first step is combined with the priority values assigned to each cell in the second step, along with the layer priority increment defined in the third step as follows: Scaling_Factor 910 + (configurable_value 915 * Priority_indicator_905) that yields in a relativeradio-capacity-threshold for each frequency. Multiplication of the relative-radio-capacity-threshold with the radio-capacity of the cells yields the radio-capacity-threshold that can be compared to the time-dependent traffic prediction of the respective frequency.

This combination generates a specific utilization threshold for each cell in both uplink and downlink channels. As each cell within a sector has a different priority value, this process creates varying threshold levels for activating features like CellShutDown in uplink and downlink for each frequency.

For example, in Fig. 9, the following PRB thresholds are calculated for three different cells:
- 2600 MHz: 25 % +(2*10 %) = 45 % CellShutdown threshold;
- 1800 MHz: 25 % +(1*10 %) = 35 % CellShutdown threshold;
- 1500 MHz: 25 % +(0*10 %) = 25 % CellShutdown threshold;

These thresholds determine the PRB utilization level at which the CellShutDown feature will be triggered for each cell in the sector. The thresholds vary across different frequencies, allowing for more granular control over when to activate energy-saving features.

In the fifth step, the thresholds derived in the fourth step are combined with the traffic predictions from the Traffic Prediction Mechanism (detailed in Fig. 10). This process, or comparison, is performed for each cell by comparing the predicted traffic load with radio-capacity-threshold of the sector.

If the time-dependent traffic prediction for a cell is below the radio-capacity-threshold calculated for that cell (optionally plus a configurable offset value of 10%), the CellShutDown feature is activated for that particular cell. The process of combining predicted traffic with threshold values serves two purposes:
1. Determine Activation Windows: It identifies specific periods or time windows during the day when the CellShutDown feature can be activated, based on traffic falling below the defined threshold level for a given cell.
2. Trigger Mechanism for Feature Activation/Deactivation: The system uses real-time traffic performance to decide when the feature should be deactivated or reactivated. If actual traffic surpasses the threshold, the feature is deactivated; conversely, if actual traffic remains below the threshold, the feature is reactivated.

This comparison and combination of prediction and thresholds ensure that features like CellShutDown are applied efficiently and at the right time to optimize resource utilization and minimize energy consumption while maintaining service quality.

The superimposed threshold shown in Fig. 10 indicates the PRB utilization level at which the feature will be triggered. The points where the traffic prediction curve intersects with the threshold line (indicated by the arrows in Fig. 10) represent the activation and deactivation points for the feature. These points define when the feature will be reactivated or deactivated based on the traffic prediction.

In this example, the predicted traffic for the cell increases at 10 AM, exceeding the defined radio-capacity-threshold. As a result, the feature (such as the Energy-Saving Feature (ESF) or CellShutDown) is deactivated to ensure the network meets traffic demands. Correspondingly, when the traffic prediction falls below the threshold at 2 PM, the feature is reactivated to save energy by shutting down unnecessary resources.

Between 10 AM and 2 PM, if the actual traffic for the cell falls below the PRB threshold, the feature can be reactivated temporarily. However, if the actual traffic remains above the threshold after 2 PM, the feature remains deactivated until the threshold condition is met once again.

By applying the same technique to each cell in a base station, specifically to both its uplink and downlink frequencies, the invention enables varying degrees of control over the CellShutDown feature. This method ensures that the feature can be applied separately to each frequency based on real-time traffic predictions and **PRB** thresholds, allowing for a more tailored and precise application.

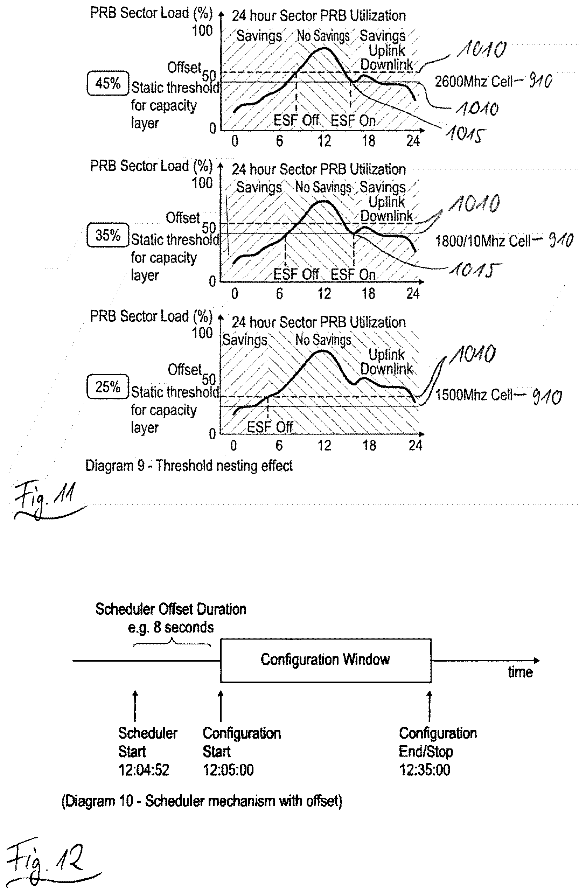

The overall effect of this approach is a nesting mechanism (illustrated in Fig. 11), where different frequencies or cells within a sector are prioritized and handled individually. This mechanism ensures that the CellShutDown feature is triggered at different times for different frequencies, depending on the specific traffic conditions in each case. As a result, some frequencies may remain active longer, while others can be deactivated earlier, optimizing the network's overall performance and energy consumption.

This nested application of the feature ensures that uplink and downlink traffic for each cell is handled independently, providing more granular control over resource management and maintaining a balance between energy savings and network performance.

This system ensures that the feature is only active when traffic falls below a certain threshold, providing efficient management of network resources by balancing energy savings with service quality. The dynamic activation and deactivation based on real-time traffic predictions allow for flexible resource allocation throughout the day, ensuring optimal performance.

Fig. 11 illustrates that when different thresholds are applied to the traffic prediction, the start and stop times of the feature can vary for each cell. This results in a nesting effect, as described under Mechanism 2, where features are activated and deactivated for different cells within the sector at different times.

By allowing each cell to be prioritized based on its importance and available load capacity, the invention ensures that each cell operates with a different **PRB** threshold. As a result, each cell's feature activation and deactivation times are governed by its individual traffic prediction. This approach ensures that the network adapts dynamically throughout the day to changes in traffic demand.

In Fig. 11, it is evident that for three cells-2600MHz, 1800MHz (10MHz), and 1500MHz (10MHz)-the activation and deactivation times vary. The 2600MHz cell holds the feature activation for the longest period during the prediction interval, followed by the 1800MHz cell. Meanwhile, the 1500MHz cell has the shortest activation time due to its assignment as a cell with greater importance and load capacity.

This approach enables more granular control over resource management, ensuring that high-priority cells maintain network performance for longer periods, while lower-priority cells can be deactivated sooner, optimizing energy savings and network efficiency.

Another aspect of the invention is the just-in-time Scheduler also name real-time-schedular. The scheduler is responsible for sending configuration settings to the network at precisely the required time, based on outputs from the feature configurator. The feature configurator can be run at any time to determine the appropriate activation and deactivation periods for a feature. Typically, this is done during early morning hours for the entire network or a subset of it, before the anticipated rise in daily traffic.

Once the configurator has determined the necessary configurations, these are stored as part of a plan in a sleep state until the appropriate time for deployment. The scheduler monitors these configurations and determines the exact time to send them to the network. The configurations are executed on the base station via the Element Management System (EMS), which ensures the proper application of the settings at the network level.

For example, if a configuration is scheduled to activate at 12:05:00 (as shown in Fig. 12), the settings are stored until that time. Only when the specific time is reached does the scheduler send the configuration to the network. The invention also includes a configurable offset duration, which allows precise control over when the configuration should be sent to the network. In typical network deployment scenarios, the offset might be set to 6 to 8 seconds, so in the example, the configuration would be sent at 12:04:52 to ensure the network has enough time to apply the settings exactly at 12:05:00.

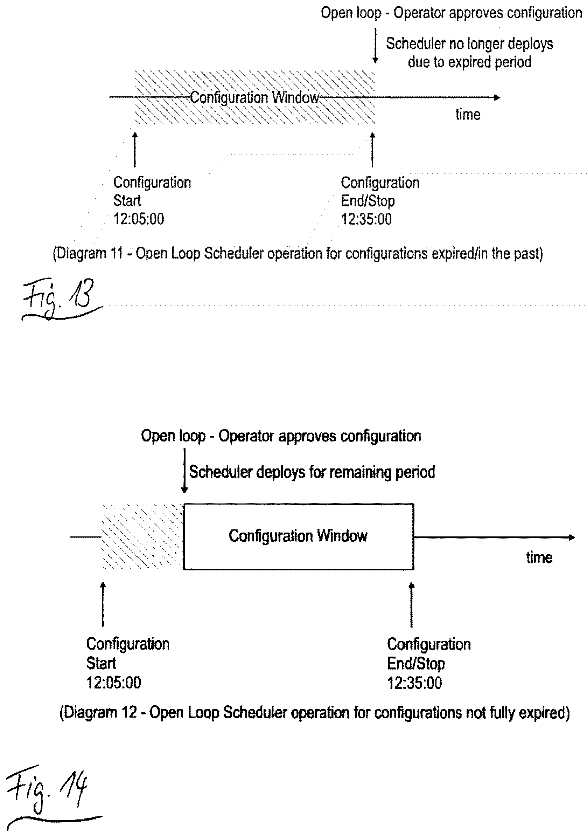

The invention can differentiate between closed-loop and open-loop operations, as depicted in Fig. 13. In closed-loop operations, the feature configurator and scheduler function in a fully automated manner, without the need for human intervention. The system autonomously manages the configuration, activation, and deactivation of features.

In contrast, open-loop operations allow for manual intervention. Here, an operator has the opportunity to review configurations to ensure their accuracy and suitability before approving them for deployment. This manual approval process ensures that the configurations meet operational requirements before being executed on the network.

During open-loop operations, the time at which the configuration was calculated and the time at which the operator reviews and approves it for deployment may differ. If the operator reviews a configuration after its activation window has passed, the scheduler recognizes that the configuration's deployment period has expired and will disregard the operator's instruction to deploy the configuration.

However, if a configuration is partially expired and some portion of the activation window is still available (as shown in Fig. 14), the scheduler allows the configuration to be deployed. In this case, once the operator manually approves the configuration, the scheduler sends the settings to the network immediately, bypassing the offset period. The configuration is sent directly to the network, where it is immediately activated or deactivated, depending on the real-time traffic conditions and system requirements.

## Claims

1. A method, performed by a radio-resources-management-module of a mobile communication network, for managing radio resources in the mobile communication network comprising a plurality of cells, wherein each cell operates on a distinct frequency and is part of a sector, the method comprising:
a) Assessing traffic data of cells (210) in a sector (215) based on historical traffic data to determine a time-dependent traffic prediction (600) for the cells of the sector (215);
b) Determining a radio capacity of each cell (210) based on available radio resources in each cell (210), wherein each cell identified by its frequency contributes to a total radio sector capacity;
c) Assigning a priority indicator (905) to each cell within the sector (215), each cell being identified by its respective frequency (910), wherein the priority indicator (905) determines the order in which energy-saving features, comprising temporarily deactivating underutilized cells, are applied to the respective cells;
d) Comparing a radio-capacity-threshold (1010) for each frequency (910) identifying a cell of the sector with the time-dependent traffic prediction for the respective frequency, wherein the radio-capacity-threshold for each frequency is a function of the priority indicator and the radio capacity of the respective cell;
e) Applying an energy-saving feature (1015) to a specific cell identified by its frequency if the time-dependent traffic prediction for that cell is lower than the cell's radio-capacity-threshold.

2. The method of Claim 1, wherein the energy-saving feature is a CellShutDown functionality (1015) that reduces a number of active radio units providing network resources in a cell when the time-dependent traffic prediction for that cell indicates that its resource usage is below a predefined threshold, in particular the CellShutDown functionality is applied separately to the uplink or the downlink of a cell.

3. The method of any of the Claims 1 to 2, the method further comprising using PRB sample index counter data to calculate the time-dependent traffic prediction, and wherein PRB sample index counter data is measured in bins and records a duration of PRB utilization in seconds for defined levels of utilization, with each bin representing a different level of utilization of radio resources, wherein the measurement is done over a predetermined period based on historical PRB usage data.

4. The method of any of the Claims 1 to 3, the method further comprising calculating a total radio sector capacity by summing the PRB capacity of all cells within the sector, wherein the radio capacity is summed up over all frequencies but separately for the uplink and downlink cases.

5. The method of Claim 4, the method further comprising determining a scaling factor (910) based on the total radio capacity of the sector, wherein this results in the radio-capacity-threshold for each frequency as being a function of the priority indicator, the radio capacity and a scaling of each cell.

6. The method of any of the Claims 1-5, further comprising setting an upper bound for the time-dependent traffic prediction of each cell, wherein the upper bound is a 95^{th} quantile or a 99^{th} quantile of the cell's utilization.

7. The method of any of the Claims 1 to 6, wherein the priority indicator is assigned based on the frequency of each cell, with higher-frequency cells having a higher priority indicator, and the priority indicator determines the order in which features are applied to the frequencies in the sector.

8. The method of any of the Claims 1 to 7, wherein the step of applying the feature comprises:
a) Activating a feature in real-time when the traffic prediction for a specific cell is below a threshold value determined by the priority indicator for that frequency;
b) Deactivating the feature in real-time when the traffic prediction exceeds the threshold value.

9. The method of any of the Claims 1 to 8, wherein the historical traffic data used for the time-dependent traffic prediction is based on a predetermined period, such as the past 8 days, and is scaled by taking into account weekly patterns and special days of importance.

10. The method of any of the claims 1 to 9, the method further comprising adjusting the time interval for calculating the traffic prediction based on the desired level of prediction accuracy, and wherein the time interval for the traffic prediction corresponds to the time interval for applying the feature.

11. A radio-resources-management-module of a mobile communication network, the mobile communication network comprising a plurality of cells, wherein each cell operates on a distinct frequency and is part of a sector, the radio-resources-management-module comprising:
a) a traffic-prediction-means configured to assess traffic data of cells in a sector based on historical traffic data to determine a time-dependent traffic prediction for the cells of the sector;
b) a radio-capacity-determination-means configured to determine the radio capacity of each cell based on available radio resources in each cell, wherein each cell identified by its frequency contributes to a total sector capacity;
c) a processing unit configured to
i) assign a priority indicator to each cell within the sector, each cell being identified by its respective frequency, wherein the priority indicator determines the order in which energy-saving features, comprising temporarily deactivating underutilized cells, are applied to the respective cells;
ii) to compare a radio-capacity-threshold for each frequency identifying a cell of the sector with the time-dependent traffic prediction for the respective frequency, wherein the radio-capacity-threshold for each frequency is a function of the priority indicator and the radio capacity of the respective cell;
iii) create a trigger signal to apply an energy-saving feature to a specific cell identified by its frequency if the time-dependent traffic prediction for that cell is lower than the cell's radio-capacity-threshold.

12. The radio-resources-management-module of Claim 11, comprising a real-time scheduler configured to apply the snergy-saving feature to the speciific cell in real-time.

13. A communication system of a mobile network provider for managing radio resources in a mobile communication network comprising a plurality of cells, wherein each cell operates on a distinct frequency and is part of a sector, the system comprising:
• at least one base station for providing the network coverage of a sector, wherein the sector comprises cells making up the sector, wherein neighboring cells have different frequencies;
• a data base for storing historical usage data of the plurality of cells;
• a radio-resources-management-module of claim 11, the radio-resources-management-module having communication interfaces to the at least one base station and to the data base, and wherein the radio-resources-management-module is configured to send the trigger signal to the at least one base station.

14. The communication system of claim 13, configured to support Wi-Fi, 3G, 4G, 5G and/or 6G mobile communication.

15. A computer-readable storage medium comprising program instructions which, when executed by a processor of a radio-resources-management-module of a mobile communication network, cause the radio-resources-management-module to perform any of the methods of claims 1-10.

## Patentansprüche

1. Verfahren, durchgeführt von einem Funkressourcenverwaltungsmodul eines Mobilkommunikationsnetzes, zum Verwalten von Funkressourcen in dem Mobilkommunikationsnetz, das eine Vielzahl von Zellen umfasst, wobei jede Zelle auf einer unterschiedlichen Frequenz arbeitet und Teil eines Sektors ist, wobei das Verfahren umfasst:
a) Bewerten von Verkehrsdaten von Zellen (210) in einem Sektor (215) auf Grundlage historischer Verkehrsdaten, um eine zeitabhängige Verkehrsprognose (600) für die Zellen des Sektors (215) zu bestimmen;
b) Bestimmen einer Funkkapazität jeder Zelle (210) auf Grundlage verfügbarer Funkressourcen in jeder Zelle (210), wobei jede durch ihre Frequenz identifizierte Zelle zu einer gesamten Funksektorkapazität beiträgt;
c) Zuweisen eines Prioritätsindikators (905) zu jeder Zelle innerhalb des Sektors (215), wobei jede Zelle durch ihre jeweilige Frequenz (910) identifiziert ist, wobei der Prioritätsindikator (905) die Reihenfolge bestimmt, in der Energiesparfunktionen, die ein vorübergehendes Deaktivieren nicht ausreichend ausgelasteter Zellen umfassen, auf die jeweiligen Zellen angewendet werden;
d) Vergleichen eines Funkkapazitätsschwellenwerts (1010) für jede Frequenz (910), die eine Zelle des Sektors identifiziert, mit der zeitabhängigen Verkehrsprognose für die jeweilige Frequenz, wobei der Funkkapazitätsschwellenwert für jede Frequenz eine Funktion des Prioritätsindikators und der Funkkapazität der jeweiligen Zelle ist;
e) Anwenden einer Energiesparfunktion (1015) auf eine spezifische, durch ihre Frequenz identifizierte Zelle, wenn die zeitabhängige Verkehrsprognose für diese Zelle niedriger als der Funkkapazitätsschwellenwert der Zelle ist.

2. Verfahren nach Anspruch 1, wobei die Energiesparfunktion eine CellShutDown-Funktionalität (1015) ist, die eine Anzahl aktiver Funkeinheiten reduziert, die Netzwerkressourcen in einer Zelle bereitstellen, wenn die zeitabhängige Verkehrsprognose für diese Zelle angibt, dass ihre Ressourcennutzung unterhalb eines vordefinierten Schwellenwerts liegt, wobei insbesondere die CellShutDown-Funktionalität separat auf den Uplink oder den Downlink einer Zelle angewendet wird.

3. Verfahren nach einem der Ansprüche 1 bis 2, wobei das Verfahren ferner das Verwenden von PRB-Abtastindex-Zählerdaten zum Berechnen der zeitabhängigen Verkehrsprognose umfasst, und wobei PRB-Abtastindex-Zählerdaten in Bins gemessen werden und eine Dauer der PRB-Auslastung in Sekunden für definierte Auslastungsniveaus aufzeichnen, wobei jedes Bin ein anderes Auslastungsniveau von Funkressourcen darstellt, wobei die Messung über einen vorbestimmten Zeitraum auf Grundlage historischer PRB-Nutzungsdaten durchgeführt wird.

4. Verfahren nach einem der Ansprüche 1 bis 3, wobei das Verfahren ferner das Berechnen einer gesamten Funksektorkapazität durch Summieren der PRB-Kapazität aller Zellen innerhalb des Sektors umfasst, wobei die Funkkapazität über alle Frequenzen summiert wird, jedoch separat für die Uplink- und Downlink-Fälle.

5. Verfahren nach Anspruch 4, wobei das Verfahren ferner das Bestimmen eines Skalierungsfaktors (910) auf Grundlage der gesamten Funkkapazität des Sektors umfasst, wobei sich daraus ergibt, dass der Funkkapazitätsschwellenwert für jede Frequenz eine Funktion des Prioritätsindikators, der Funkkapazität und einer Skalierung jeder Zelle ist.

6. Verfahren nach einem der Ansprüche 1 bis 5, ferner umfassend das Festlegen einer oberen Grenze für die zeitabhängige Verkehrsprognose jeder Zelle, wobei die obere Grenze ein 95tel Quantil oder ein 99tel Quantil der Auslastung der Zelle ist.

7. Verfahren nach einem der Ansprüche 1 bis 6, wobei der Prioritätsindikator auf Grundlage der Frequenz jeder Zelle zugewiesen wird, wobei Zellen mit höherer Frequenz einen höheren Prioritätsindikator aufweisen, und wobei der Prioritätsindikator die Reihenfolge bestimmt, in der Funktionen auf die Frequenzen in dem Sektor angewendet werden.

8. Verfahren nach einem der Ansprüche 1 bis 7, wobei der Schritt des Anwendens der Funktion umfasst:
a) Aktivieren einer Funktion in Echtzeit, wenn die Verkehrsprognose für eine spezifische Zelle unterhalb eines durch den Prioritätsindikator für diese Frequenz bestimmten Schwellenwerts liegt;
b) Deaktivieren der Funktion in Echtzeit, wenn die Verkehrsprognose den Schwellenwert überschreitet.

9. Verfahren nach einem der Ansprüche 1 bis 8, wobei die für die zeitabhängige Verkehrsprognose verwendeten historischen Verkehrsdaten auf einem vorbestimmten Zeitraum, wie etwa den vergangenen 8 Tagen, beruhen und unter Berücksichtigung wöchentlicher Muster und besonderer Tage von Bedeutung skaliert werden.

10. Verfahren nach einem der Ansprüche 1 bis 9, wobei das Verfahren ferner das Anpassen des Zeitintervalls zum Berechnen der Verkehrsprognose auf Grundlage des gewünschten Grades an Prognosegenauigkeit umfasst und wobei das Zeitintervall für die Verkehrsprognose dem Zeitintervall zum Anwenden der Funktion entspricht.

11. Funkressourcenverwaltungsmodul eines Mobilkommunikationsnetzes, wobei das Mobilkommunikationsnetz eine Vielzahl von Zellen umfasst, wobei jede Zelle auf einer unterschiedlichen Frequenz arbeitet und Teil eines Sektors ist, wobei das Funkressourcenverwaltungsmodul umfasst:
a) ein Verkehrsprognosemittel, das eingerichtet ist, Verkehrsdaten von Zellen in einem Sektor auf Grundlage historischer Verkehrsdaten zu bewerten, um eine zeitabhängige Verkehrsprognose für die Zellen des Sektors zu bestimmen;
b) ein Funkkapazitätsbestimmungsmittel, das eingerichtet ist, die Funkkapazität jeder Zelle auf Grundlage verfügbarer Funkressourcen in jeder Zelle zu bestimmen, wobei jede durch ihre Frequenz identifizierte Zelle zu einer gesamten Sektorkapazität beiträgt;
c) eine Verarbeitungseinheit, die eingerichtet ist zum
i) Zuweisen eines Prioritätsindikators zu jeder Zelle innerhalb des Sektors, wobei jede Zelle durch ihre jeweilige Frequenz identifiziert ist, wobei der Prioritätsindikator die Reihenfolge bestimmt, in der Energiesparfunktionen, die ein vorübergehendes Deaktivieren nicht ausreichend ausgelasteter Zellen umfassen, auf die jeweiligen Zellen angewendet werden;
ii) Vergleichen eines Funkkapazitätsschwellenwerts für jede Frequenz, die eine Zelle des Sektors identifiziert, mit der zeitabhängigen Verkehrsprognose für die jeweilige Frequenz, wobei der Funkkapazitätsschwellenwert für jede Frequenz eine Funktion des Prioritätsindikators und der Funkkapazität der jeweiligen Zelle ist;
iii) Erzeugen eines Triggersignals zum Anwenden einer Energiesparfunktion auf eine spezifische, durch ihre Frequenz identifizierte Zelle, wenn die zeitabhängige Verkehrsprognose für diese Zelle niedriger als der Funkkapazitätsschwellenwert der Zelle ist.

12. Funkressourcenverwaltungsmodul nach Anspruch 11, umfassend einen Echtzeit-Scheduler, der eingerichtet ist, die Energiesparfunktion in Echtzeit auf die spezifische Zelle anzuwenden.

13. Kommunikationssystem eines Mobilfunknetzbetreibers zum Verwalten von Funkressourcen in einem Mobilkommunikationsnetz, das eine Vielzahl von Zellen umfasst, wobei jede Zelle auf einer unterschiedlichen Frequenz arbeitet, und Teil eines Sektors ist, wobei das System umfasst:
• mindestens eine Basisstation zum Bereitstellen der Netzabdeckung eines Sektors, wobei der Sektor Zellen umfasst, die den Sektor bilden, wobei benachbarte Zellen unterschiedliche Frequenzen aufweisen;
• eine Datenbank zum Speichern historischer Nutzungsdaten der Vielzahl von Zellen;
• ein Funkressourcenverwaltungsmodul nach Anspruch 11, wobei das Funkressourcenverwaltungsmodul Kommunikationsschnittstellen zu der mindestens einen Basisstation und zu der Datenbank aufweist und wobei das Funkressourcenverwaltungsmodul eingerichtet ist, das Triggersignal an die mindestens eine Basisstation zu senden.

14. Kommunikationssystem nach Anspruch 13, eingerichtet zum Unterstützen von Wi-Fi-, 3G-, 4G-, 5G- und/oder 6G-Mobilkommunikation.

15. Computerlesbares Speichermedium, umfassend Programmanweisungen, die bei Ausführung durch einen Prozessor eines Funkressourcenverwaltungsmoduls eines Mobilkommunikationsnetzes das Funkressourcenverwaltungsmodul veranlassen, eines der Verfahren nach den Ansprüchen 1 bis 10 durchzuführen.

## Revendications

1. Procédé, réalisé par un module de gestion de ressources radio d'un réseau de communication mobile, pour gérer des ressources radio dans le réseau de communication mobile comprenant une pluralité de cellules, où chaque cellule fonctionne sur une fréquence distincte et fait partie d'un secteur, le procédé comprenant les étapes suivantes :
a) évaluer des données de trafic de cellules (210) dans un secteur (215) sur la base de données de trafic historiques afin de déterminer une prédiction de trafic dépendant du temps (600) pour les cellules du secteur (215) ;
b) déterminer une capacité radio de chaque cellule (210) sur la base des ressources radio disponibles dans chaque cellule (210), chaque cellule identifiée par sa fréquence contribuant à une capacité totale de secteur radio ;
c) affecter un indicateur de priorité (905) à chaque cellule du secteur (215), chaque cellule étant identifiée par sa fréquence respective (910), l'indicateur de priorité (905) déterminant l'ordre dans lequel des fonctionnalités d'économie d'énergie, comprenant des cellules temporairement désactivées et/ou sous-utilisées, sont appliquées aux cellules respectives ;
d) comparer un seuil de capacité radio (1010) pour chaque fréquence (910) identifiant une cellule du secteur à la prédiction de trafic dépendant du temps pour la fréquence respective, où le seuil de capacité radio pour chaque fréquence est fonction de l'indicateur de priorité et de la capacité radio de la cellule respective ;
e) appliquer une fonctionnalité d'économie d'énergie (1015) à une cellule spécifique identifiée par sa fréquence si la prédiction de trafic dépendant du temps pour cette cellule est inférieure au seuil de capacité radio de la cellule.

2. Procédé selon la revendication 1, dans lequel la fonctionnalité d'économie d'énergie est une fonctionnalité CellShutDown (1015) qui réduit un nombre d'unités radio actives fournissant des ressources de réseau dans une cellule lorsque la prédiction de trafic dépendante du temps pour cette cellule indique que son utilisation des ressources est inférieure à un seuil prédéfini, en particulier la fonctionnalité CellShutDown est appliquée séparément à la liaison montante ou à la liaison descendante d'une cellule.

3. Procédé selon l'une quelconque des revendications 1 et 2, le procédé comprenant en outre d'utiliser des données de compteur d'index d'échantillonnage PRB pour calculer la prédiction de trafic dépendant du temps, et où les données de compteur d'index d'échantillonnage PRB sont mesurées par intervalles (bin) et enregistrent une durée d'utilisation PRB en secondes pour des niveaux d'utilisation définis, chaque intervalle représentant un niveau différent d'utilisation des ressources radio, où la mesure est effectuée sur une période prédéterminée sur la base de données d'utilisation PRB historiques.

4. Procédé selon l'une quelconque des revendications 1 à 3, le procédé comprenant en outre de calculer une capacité totale de secteur radio en additionnant la capacité PRB de toutes les cellules à l'intérieur du secteur, où la capacité radio est additionnée sur toutes les fréquences mais séparément pour les cas de liaison montante et de liaison descendante.

5. Procédé selon la revendication 4, le procédé comprenant en outre de déterminer un facteur de mise à l'échelle (910) sur la base de la capacité radio totale du secteur, cela conduisant à ce que le seuil de capacité radio pour chaque fréquence soit une fonction de l'indicateur de priorité, de la capacité radio et d'une mise à l'échelle de chaque cellule.

6. Procédé selon l'une quelconque des revendications 1 à 5, comprenant en outre d'établir une borne supérieure pour la prédiction de trafic dépendant du temps de chaque cellule, où la borne supérieure est un quantile à 95 % ou un quantile à 99 % de l'utilisation de la cellule.

7. Procédé selon l'une quelconque des revendications 1 à 6, dans lequel l'indicateur de priorité est attribué sur la base de la fréquence de chaque cellule, des cellules de fréquence plus élevée ayant un indicateur de priorité plus élevée, et l'indicateur de priorité déterminant l'ordre dans lequel des fonctionnalités sont appliquées aux fréquences dans le secteur.

8. Procédé selon l'une quelconque des revendications 1 à 7, dans lequel l'étape d'application de la fonctionnalité comprend les étapes suivantes :
a) activer une fonctionnalité en temps réel lorsque la prédiction de trafic pour une cellule spécifique est inférieure à une valeur seuil déterminée par l'indicateur de priorité pour cette fréquence ;
b) désactiver la fonctionnalité en temps réel lorsque la prédiction de trafic dépasse la valeur seuil.

9. Procédé selon l'une quelconque des revendications 1 à 8, dans lequel les données historiques de trafic utilisées pour la prédiction de trafic en fonction du temps sont basées sur une période prédéterminée, telle que les 8 derniers jours, et sont mises à l'échelle en tenant compte de modèles hebdomadaires et de jours spéciaux d'importance.

10. Procédé selon l'une quelconque des revendications 1 à 9, le procédé comprenant en outre d'ajuster l'intervalle de temps pour calculer la prédiction de trafic sur la base du niveau souhaité de précision de prédiction, et où l'intervalle de temps pour la prédiction de trafic correspond à l'intervalle de temps pour appliquer la fonctionnalité.

11. Module de gestion de ressources radio d'un réseau de communication mobile, le réseau de communication mobile comprenant une pluralité de cellules, où chaque cellule fonctionne sur une fréquence distincte et fait partie d'un secteur, le module de gestion des ressources radio comprenant :
a) des moyens de prédiction de trafic configurés pour évaluer les données de trafic des cellules d'un secteur sur la base de données de trafic historiques afin de déterminer une prédiction de trafic dépendant du temps pour les cellules du secteur ;
b) des moyens de détermination des capacités radio configurés pour déterminer les capacités radio de chaque cellule sur la base des ressources radio disponibles dans chaque cellule, où chaque cellule identifiée par sa fréquence contribue à une capacité totale de secteur ;
c) une unité de traitement configurée pour
i) affecter un indicateur de priorité à chaque cellule du secteur, chaque cellule étant identifiée par sa fréquence respective, l'indicateur de priorité déterminant l'ordre dans lequel des fonctionnalités d'économie d'énergie, comprenant des cellules temporairement désactivées et/ou sous-utilisées, sont appliquées aux cellules respectives ;
ii) comparer un seuil de capacité radio pour chaque fréquence identifiant une cellule du secteur à la prédiction de trafic dépendant du temps pour la fréquence respective, où le seuil de capacité radio pour chaque fréquence est fonction de l'indicateur de priorité et de la capacité radio de la cellule respective ;
iii) créer un signal de déclenchement pour appliquer une fonctionnalité d'économie d'énergie à une cellule spécifique identifiée par sa fréquence si la prédiction de trafic dépendant du temps pour cette cellule est inférieure au seuil de capacité radio de la cellule.

12. Module de gestion de ressources radio selon la revendication 11, comprenant un programmateur en temps réel configuré pour appliquer la fonctionnalité d'économie d'énergie à la cellule spécifique en temps réel.

13. Système de communication d'un fournisseur de réseau mobile permettant de gérer des ressources radio dans un réseau de communication mobile comprenant une pluralité de cellules, chaque cellule fonctionnant sur une fréquence distincte et faisant partie d'un secteur, le système comprenant :
• au moins une station de base pour assurer la couverture réseau d'un secteur, où le secteur comprend des cellules composant le secteur, où des cellules voisines ont des fréquences différentes ;
• une base de données de stockage de données historiques d'usage de la pluralité de cellules ;
• un module de gestion de ressources radio selon la revendication 11, le module de gestion de ressources radio ayant des interfaces de communication avec l'au moins une station de base et avec la base de données, et où le module de gestion de ressources radio est configuré pour envoyer le signal de déclenchement à l'au moins une station de base.

14. Système de communication selon la revendication 13, configuré pour prendre en charge les communications mobiles Wi-Fi, 3G, 4G, 5G et/ou 6G.

15. Support de stockage lisible par ordinateur comprenant des instructions de programme qui, lorsqu'elles sont exécutées par un processeur d'un module de gestion de ressources radio d'un réseau de communication mobile, amènent le module de gestion de ressources radio à exécuter l'un quelconque des procédés des revendications 1 à 10.
